# EUROPEAN PATENT SPECIFICATION

(11) **EP 1 265 349 B1**
(45) Date of publication and mention of the grant of the patent: **21.09.2005**
(21) Application number: 02253854.0
(22) Date of filing: 31.05.2002
(51) Int. Cl.: H02P 7/05, H02P 6/20

(54) **Controlling of a switched reluctance motor**
Steuerung eines geschalteten Reluktanzmotors
Commande d'une machine à réluctance commutée

(30) Priority: 06.06.2001 GB 0113776
(43) Date of publication of application: 11.12.2002
(73) Proprietor: SWITCHED RELUCTANCE DRIVES LIMITED, North Yorkshire HG3 1PR (GB)
(72) Inventor: Elliott, Charles Richard, Calverley, Leeds LS28 5PS (GB); Jordison, Ian, Harrogate, HG3 2UX (GB)
(74) Representative: Hale, Peter

(56) References cited:
- EP-B- 0 734 117
- DE-A- 10 006 191
- US-A- 6 014 002
- US-A- 6 054 819

## Description

This invention relates to excitation of switched reluctance motors. In particular, it relates to excitation to minimise the supply current drawn for a particular output.

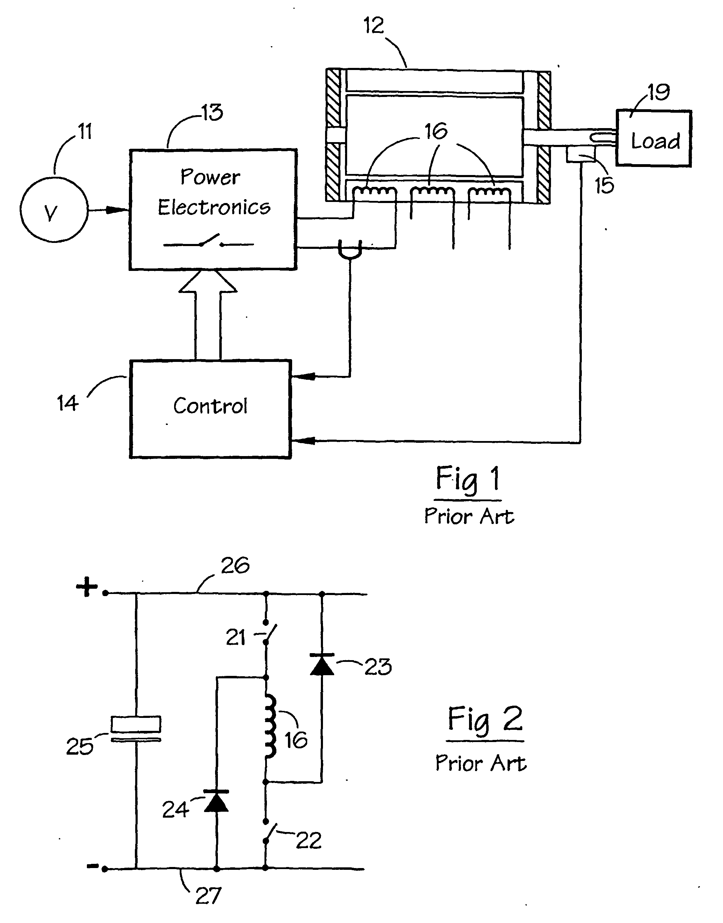

The characteristics and operation of switched reluctance systems are well known in the art and are described in, for example, "The characteristics, design and application of switched reluctance motors and drives" by Stephenson and Blake, PCIM'93, Nürnberg, 21-24 June 1993. Figure 1 shows a typical switched reluctance drive in schematic form, where the switched reluctance motor 12 drives a load 19. The input DC power supply 11 can be either a battery or rectified and filtered AC mains. The DC voltage provided by the power supply 11 is switched across the phase windings 16 of the motor 12 by a power converter 13 under the control of the electronic control unit 14. The switching must be correctly synchronised to the angle of rotation of the rotor for proper operation of the drive, and a rotor position detector 15 is typically employed to supply signals corresponding to the angular position of the rotor. The rotor position detector 15 may take many forms and its output may also be used to generate a speed feedback signal.

Many different power converter topologies are known, several of which are discussed in the Stephenson paper cited above. One of the most common configurations is shown for a single phase of a polyphase system in Figure 2, in which the phase winding 16 of the machine is connected in series with two switching devices 21 and 22 across the busbars 26 and 27. Busbars 26 and 27 are collectively described as the "DC link" of the converter. Energy recovery diodes 23 and 24 are connected to the winding to allow the winding current to flow back to the DC link when the switches 21 and 22 are opened. A capacitor 25, known as the "DC link capacitor", is connected across the DC link to source or sink any alternating component of the DC link current (ie the so-called "ripple current") which cannot be drawn from or returned to the supply. In practical terms, the capacitor 25 may comprise several capacitors connected in series and/or parallel, and where parallel connection is used, some of the elements may be distributed throughout the converter.

For any system, there is the requirement to know the position of the rotor relative to the stator. While a high resolution resolver could be used, these are relatively expensive and unnecessarily complex for the majority of applications. Instead, a relatively simple rotor position transducer (rpt) is usually used, comprising a castellated member fixed to the rotor and a set of detectors fixed relative to the stator. Common systems use disc or cup-shaped vanes on the rotor with the same number of teeth as there are rotor poles, together with optical or magnetic detectors on the stator, typically with one detector for each phase of the drive.

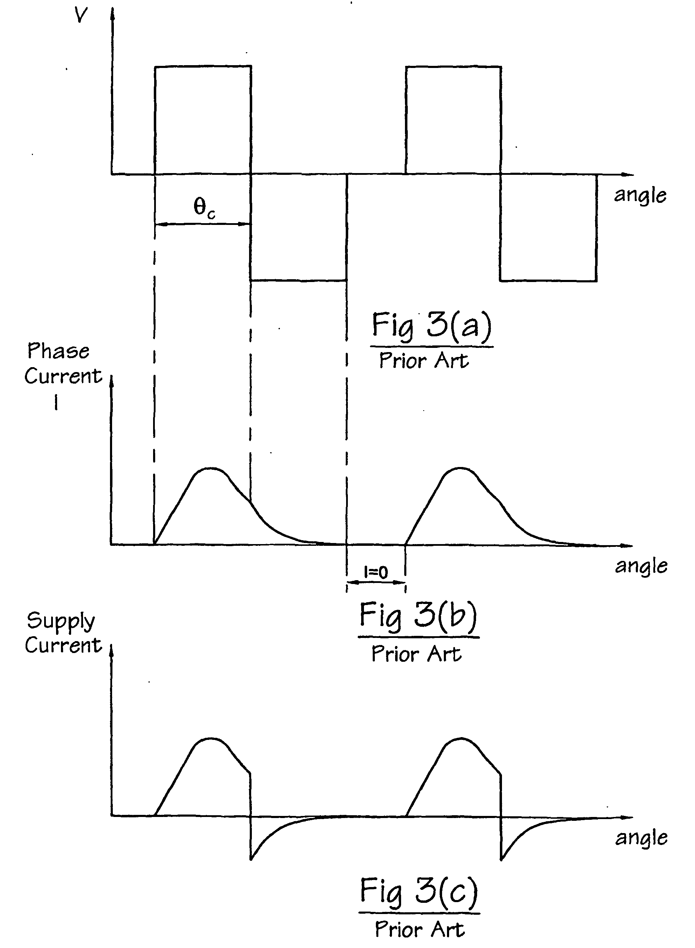

The switched reluctance drive is essentially a variable speed system and is characterised by voltages and currents in the phase windings of the machine which are quite different from those found in traditional, sinusoidally fed, types of machines. As is well known, there are two basic modes of operation of switched reluctance systems: chopping mode and single-pulse mode, both of which are described in the Stephenson paper cited above. Figure 3 illustrates single-pulse control. Figure 3(a) shows the voltage waveform typically applied by the controller to the phase winding. At a predetermined rotor angle, the voltage is applied by switching on the switches in the power converter 13 and applying constant voltage for a given angle θc, the conduction angle. The current rises from zero, typically reaches a peak and falls slightly as shown in Figure 3(b). When θc has been traversed, the switches are opened and the action of energy return diodes places a negative voltage across the winding, causing the flux in the machine, and hence the current, to decay to zero. There is then typically a period of zero current until the cycle is repeated. It will be clear that the phase is drawing energy from the supply during θc and returning a smaller amount to the supply thereafter. Figure 3(c) shows the current which has to be supplied to the phase winding by the power converter and the current which flows back to the converter during the period of energy return. Instead of opening both switches simultaneously, it is well known that there are advantages in opening one switch in advance of the other, allowing the current to circulate around the loop formed by the closed switch, the phase winding and a diode - this is known as "freewheeling" and is used for various reasons, including peak current limitation and acoustic noise reduction. The single-pulse mode is normally used for the medium and high speeds in the speed range of a typical drive.

At zero and low speeds, however, the single-pulse mode is not suitable, due to the high peak currents which would be experienced, and the chopping mode is used. There are two principal variants of the chopping mode. The simplest method is to simultaneously open the two switches associated with a phase winding, eg switches 21 and 22 in Figure 2. This causes energy to be returned from the machine to the DC link. This is sometimes known as "hard chopping". The alternative method is to open only one of the switches and allow freewheeling to occur: this is known as "freewheel chopping" or "soft chopping". In this mode of control, no energy is returned to the DC link from the phase winding.

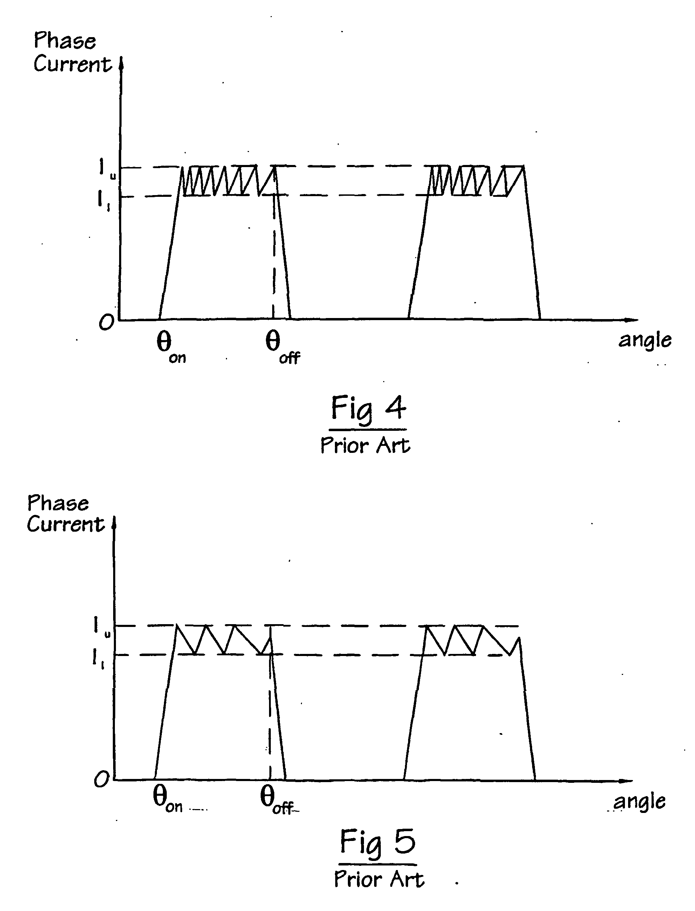

With any chopping scheme, there is a choice of strategy for determining the current levels to be used. Many such strategies are known in the art. One commonly used scheme is to use a hysteresis controller which enables chopping between upper and lower currents. A typical scheme is shown in Figure 4 for hard chopping. At a chosen switch-on angle θₒₙ (which is often the position at which the phase has minimum inductance, but may be some other position), the voltage is applied to the phase winding and the phase current is allowed to rise until it reaches the upper hysteresis current Iᵤ. At this point both switches are opened and the current falls until it reaches the lower current I₁ and the switches are closed again, repeating the chopping cycle. Figure 5 shows the corresponding phase current waveform for a hysteresis controller using freewheeling: the reduction in chopping frequency is immediately evident.

While switched reluctance motors are described here in relation to current control and, implicitly, its feedback to the controller, those of ordinary skill in the art will appreciate that the output of a switched reluctance motor can be subjected to flux control instead. Indeed, flux has a more direct relationship to output torque or force and can, therefore, be a more accurate characteristic on which to base motor control.

None of the above takes into account what happens when the contributions of two or more phases are considered. In this situation the bus currents associated with the individual phases are added to give the total DC link current.

Two or more phases conducting together can occur in many different systems. Although in 2-phase systems it is usual to only operate the phases alternately, US 5747962, commonly assigned to the present assignee, discloses a method of operating both phases simultaneously over part of the electrical cycle of the machine. In 3-phase machines, it is possible to operate by exciting Phase A alone, then Phase B alone, then Phase C alone. However, to improve both the minimum torque and the average torque output of the machine, advantage is often taken of the fact that the torque productive portions of each phase cycle overlap. Thus, an excitation pattern of A, AB, B, BC, C, CA, A ... is normally used. Similarly for 4-phase machines, there are normally always two phases producing torque in the required direction, so phases can be energised in pairs: AB, BC, CD, DA, AB ... Corresponding rules apply for higher phase numbers, in which it is possible to use three or more phases for at least part of the electrical cycle.

It is also known to modify the mark:space ratio of the rpt so that, say, the angular width of the tooth corresponds to the desired angular width of the torque block from the phase. In this way, any desired amount of overlap can be generated, using the signals directly from the rpt. However, this torque overlap immediately increases the supply current during the regions of overlap, which may not be acceptable.

These excitations impose a considerably increased burden on the supply. While in some applications the absolute size of the DC link current is secondary to, say, torque output, in other applications there is extreme sensitivity to the DC link current, as the source may have limited capacity. Typically, such systems are found in sites which have stand-alone generation, or in mobile situations such as automotive, marine or aerospace applications. These are unsuited to drives in which there is simultaneous conduction by two phases because of the peak current demand.

US-A-6014002 discloses a method for powering a variable reluctance motor. It is concerned with responding to disturbances in the supply current by using magnetisation and demagnetisation sequences to compensate. A freewheel sequence is added to a demagnetisation sequence when a current disturbance is detected. This results in intermittent periods in which one phase will be freewheeled at the same time as another phase is magnetised. It does not disclose any means of contributing to the output torque of a motor without drawing extra current.

According to one embodiment of the invention there is provided a method of controlling a polyphase switched reluctance motor by energising phases of the motor consecutively according to a sequence, the method including the steps of: (i) energising one phase of the motor; (ii) subsequently energising an adjacent phase in the sequence; and (iii) freewheeling the one phase coincidentally with at least a portion of the period of energisation of the adjacent phase in the sequence, including initiating freewheeling of the one phase and energisation of the adjacent phase simultaneously, characterised by: (iv) repeating steps (ii) and (iii) for each consecutive pair of adjacent phases in the sequence.

The invention exploits the recognition of the fact that when current is freewheeling in a phase winding it may produce output (e.g. torque) but does not contribute to current drawn from the supply. This can be put to good effect by allowing a period of freewheeling to contribute to the motor output (e.g. torque) after a phase has completed its normal excitation block. The invention can assist in movement of the motor when the moving part (e.g. the rotor) is positioned with respect to the fixed part (e.g. the stator) in a torque or force producing region by adding the freewheeling step to raise the minimum torque or force output between the end of excitation of the first phase and the beginning of excitation of the second phase without calling on current from the electric supply.

According to another embodiment of the invention there is provided a polyphase switched reluctance drive comprising a reluctance machine having a stator, phase windings, a moving part and a controller operable to control energisation of the phase windings consecutively according to a sequence to move the moving part with respect to the stator by the steps of: (i) energising one phase; (ii) subsequently energising an adjacent phase in the sequence; and (iii) freewheeling the one phase coincidentally with at least a portion of the energisation of the adjacent phase in the sequence, including initiating freewheeling of the one phase and energisation of the adjacent phase simultaneously, characterised in that the control means are operable to repeat steps (ii) and (iii) for each consecutive pair of adjacent phases in the sequence.

Preferably, the excitation of a phase is controlled by current or flux control. For starting the motor the first phase may be primed to freewheel by energising it when the motor is at rest in a freewheeling position of the first phase prior to energising the second phase. As is conventional in switched reluctance machines it is desirable to use some form of position feedback of the moving part relative to the stator. This may be derived from monitoring a characteristic of the machine, such as phase current, or it can be derived by use of a position transducer. In this latter case the transducer mechanism also can be configured to provide priming timing information to the controller.

According to one particular form of the invention there is provided a method of controlling the output from a polyphase switched reluctance motor comprising a stator, having phase windings, and a moving part, in which the position of the moving part defines output producing regions, the method comprising: energising a first phase in a first output producing region; energising a second phase in a corresponding second output producing region; and freewheeling the first phase in a portion of the first output producing region which is coincident with at least a portion of the second output producing region, such that the freewheeling of the first phase increases the output of the motor, including initiating freewheeling of the first phase and energisation of the second phase simultaneously.

According to another particular form of the invention there is provided a switched reluctance drive system comprising a polyphase reluctance machine having a stator, including phase windings, and a moving part, in which the position of the moving part relative to the stator defines output producing regions, switch means for connecting each of the phase windings to an electrical source, and a controller operable to control the switch means to energise a first phase winding in a corresponding first output producing region, energising a second phase winding in a corresponding second output producing region, and freewheeling the first phase winding in a portion of the first output producing region, including initiating freewheeling of the first phase winding and energisation of the second phase winding simultaneously, the freewheeling of the first phase winding providing increased output of the machine.

The invention can be put into practice in various ways some of which will now be described by way of example with reference to the accompanying drawings, in which:
Figure 1 shows a schematic diagram of a known switched reluctance system;
Figure 2 shows the connection of one phase winding to the power converter of the drive of Figure 1;
Figures 3(a), (b) and (c) show waveforms of voltage, phase current and supply current, respectively, for the known single-pulse mode of operation;
Figure 4 shows the phase current waveform for the known hard chopping mode of operation;
Figure 5 shows the phase current waveform for the known freewheel chopping mode of operation;
Figure 6 shows a prior art rotor position transducer;
Figure 7 shows the output signals from the transducer of Figure 6;
Figures 8(a) & 8(b) illustrate energisation schemes for 3-phase motors;
Figure 9 shows torque curves for two phases of a 3-phase machine;
Figure 10 shows a method of combining the torque curves of Figure 9;
Figure 11 shows a second method of combining the torque curves of Figure 9;
Figure 12 shows a third method of combining the torque curves of Figure 9;
Figure 13 shows an excitation pattern according to the invention; and
Figure 14 shows a composite torque curve according to the invention.

The invention is implemented in the preferred embodiment in a drive system such as that shown in Figure 1 with switching circuits for each of the phases as shown in Figure 2. According to the invention the control strategy is adapted to exploit the freewheeling configuration of the switching circuit by programming of the controller 14.

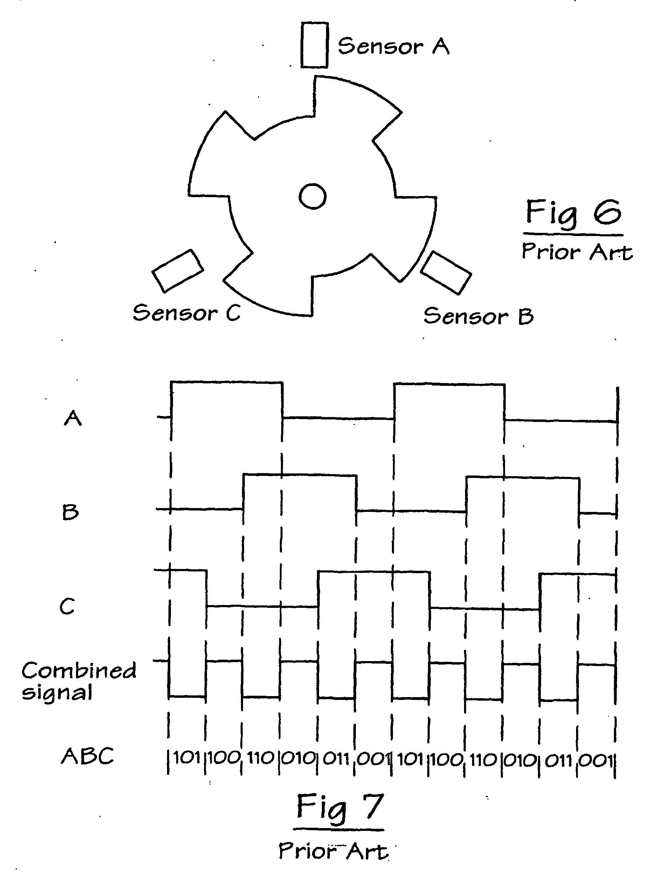

A typical rotor position transducer (rpt) for the 3-phase, 4 rotor pole, drive of Figure 1 is shown schematically in Figure 6. The three sensors are shown with 120° mechanical offset, but can have any offset which equals 120° electrical. The schematic shown has teeth with a mark:space ratio of unity. In practice, this may be varied slightly to accommodate any non-ideal characteristics of the sensors, e.g. beam width in an optical sensor or fringing in a Hall-effect sensor, so that the final signal from the rpt is at or acceptably near unity mark:space.

The output from the rpt of Figure 6 is shown in Figure 7, where it will be seen that each rpt signal has a period equal to one electrical cycle of the machine. Typically, the vane and the sensors are aligned with respect to the stator such that the transitions in a phase signal correspond to the positions of minimum and maximum inductance in that phase. It is then possible, at low speeds, to base the commutation of the machine directly on these transitions, e.g. the phase can be energised when the rpt output is 1 and de-energised when it is 0, giving the A, AB, B, BC, ... excitation pattern described earlier for a 3-phase machine. This pattern is described variously in the art as 50% conduction and 1½ phase conduction.

This excitation pattern produces the maximum torque for a given phase current, since it excites the phase over the half-cycle in which it produces torque of the desired polarity. In doing so, however, it energises the phase at the parts of its torque curve where the developed torque is small. So, while it produces the maximum possible torque, the utilisation of DC link current is relatively poor, having peaks when two phases are conducting. To avoid this problem, a simple strategy of using only one phase at a time is sometimes adopted, known variously as 33% conduction and 1-phase conduction.

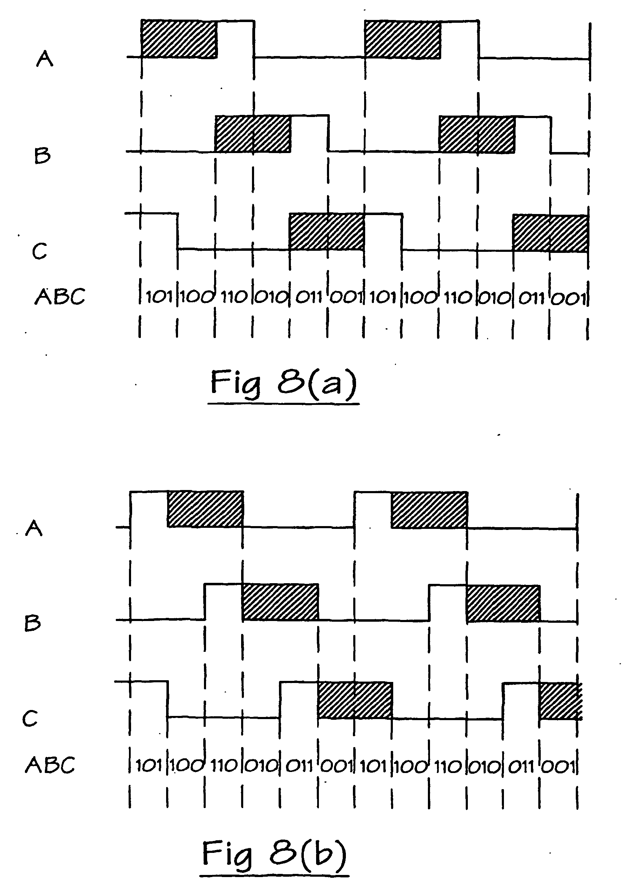

In applying this excitation strategy to a machine, it is apparent from Figure 7 that, if standard rpt signals are to be used, a decision has to made whether to use the first ²/3 or the second ²/3 of the block, since transition points are only known at ¹/3 and ²/3 of the block. These options are shown in Figure 8(a) and (b) respectively. These two options do not give the same effect, since in practical machines, the torque curves are not linear with angle over the region of partially overlapping poles, as will now be shown.

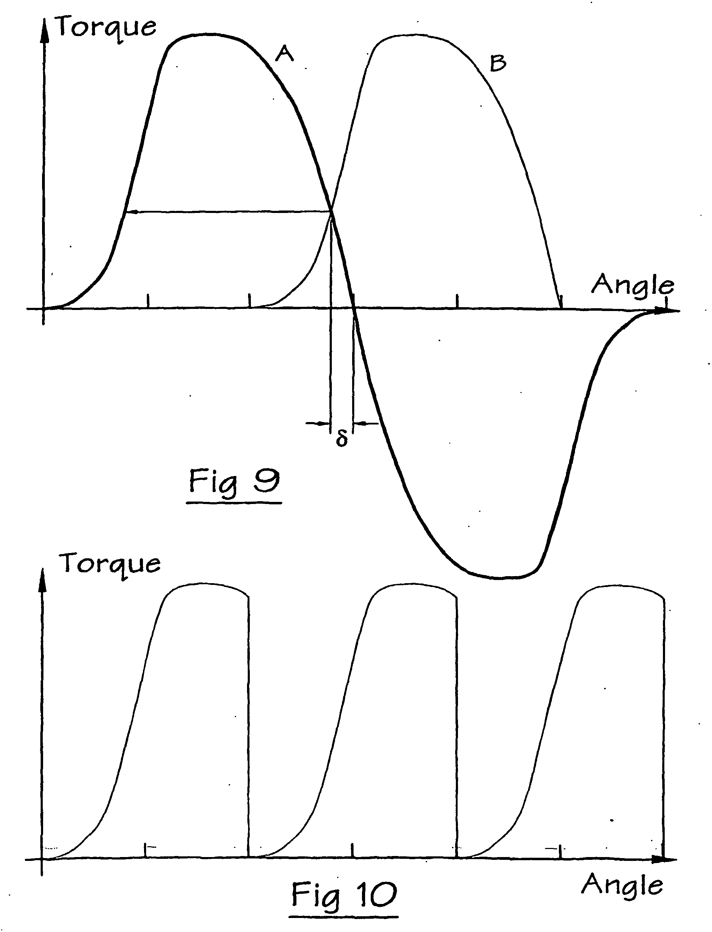

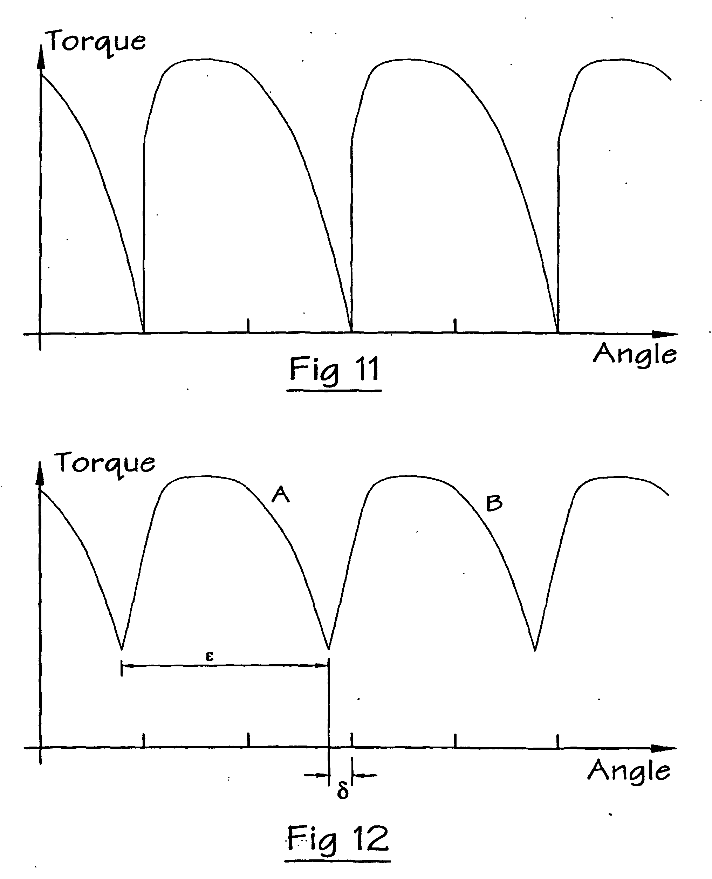

Figure 9 shows a typical torque vs. angle curve for a 3-phase machine supplied with constant phase current around its full load rating. While the exact shape is dependent on the details of magnetic geometry of the machine and the level of current supplied, the curve shown is characteristic of the shape usually found. Curve A shows the complete curve over one cycle for Phase A: curve B shows part of the curve for the adjacent Phase B. Note that the curve is symmetrical about the position of maximum inductance for the phase, Lₘₐₓ. Figure 10 shows the composite torque curve for three phases produced by using the first ²/3 pattern, i.e. switching on at the minimum inductance position. There is a large dip evident around the transition points. For the sake of comparison, Figure 11 shows the improvement of using the second ²/3 pattern, i.e. switching off at the maximum inductance position, which has a narrower dip. A significant further improvement is shown in Figure 12, where, by moving the transition point by the angle δ to the point at which the adjacent phase curves cross, the smallest dip is produced. This movement of the transition point is achieved simply by moving the alignment of the switching point of the rpt sensors by the angle δ, and is a technique commonly used in switched reluctance machines.

While the technique of shifting the rpt switching point by the angle δ produces the most torque available at every angular position for a given current, there is still a dip in the composite torque curve around the switching point. There is therefore a need for a method of increasing the available torque without increasing the current drawn from the supply.

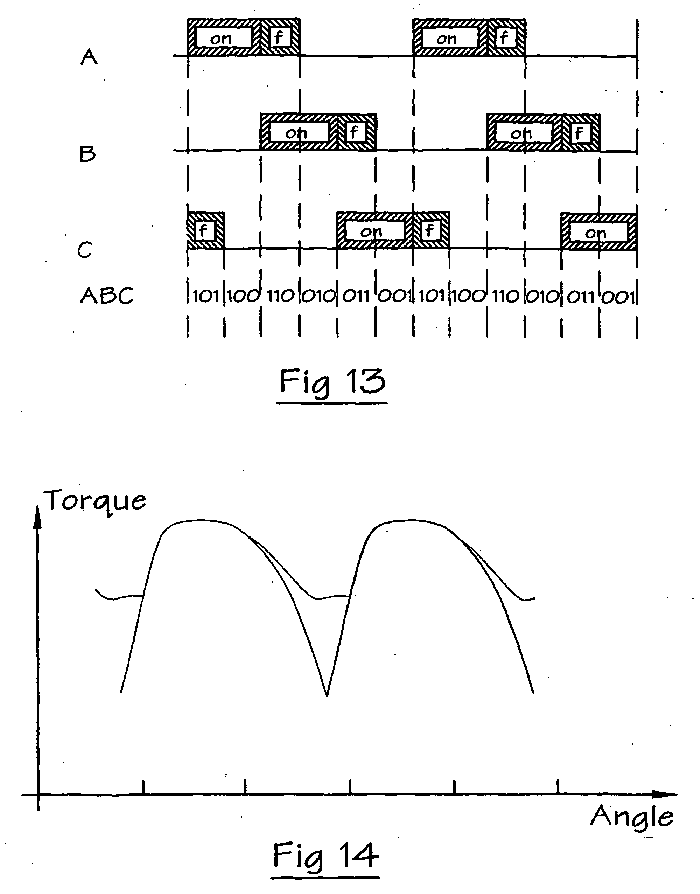

According to an embodiment of the invention the excitation pattern used is the one which is normally least favoured, i.e. the first ²/3 pattern in Figures 8(a) and 10. This allows the first ²/3 of the torque-producing region to be excited by supply current and the last ¹/3 by freewheel current. This is shown schematically in Figure 13. This is the switching strategy which is programmed in to the controller 14 of Figure 1 according to this embodiment of the invention.

The rate at which the current decays in freewheel (illustrated previously in Figure 5) is not under the direct control of the drive, since it is dependent on the speed of rotation and the voltage drops in the freewheel path (e.g. for the circuit shown in Figure 2 these are the IR drop of the winding and the forward voltage drops of the diode and switch). At very low speeds, the voltage drop dominates: at higher speeds, the rate at which the inductance of the winding is changing has a dominant effect. However, the need to "fill in" the torque dips diminishes as the speed rises, because of the smoothing effect of the mechanical inertia of the drive, so the reducing benefit of this technique with rising speed does not detract from its usefulness.

The increase in torque which arises from this invention varies from one drive to another, because of the variation of winding resistance and device losses, but if these are relatively small, the current decays only slowly and the additional torque will approximate to the "missing" part of the curves in Figure 10. When combined with the offsetting of the rpt by the angle δ (Figure 9), this can virtually double the previous minimum torque, as shown in Figure 14.

One consideration is the starting condition for the drive. The method described above of using freewheeling can only be implemented when the phase has been conducting before the freewheeling block is entered. If the drive has come to rest in, say, the region 110 in Figure 13, then simply turning on one switch in Phase A will have no effect. In this situation, the torque developed by Phase B alone may be insufficient to move the load.

According to another embodiment of the invention, a starting routine is included in the controller 14 to increase the starting torque in which control action is taken to ascertain if the drive is positioned in a region where freewheeling would normally take place in one phase. This can be done by the controller 14 inspecting the rpt signals and making the appropriate decision. For example in the 3-phase drive shown having the switching strategy of Figure 13, any region with two rpt signals high (i.e. =1) is one where, according to the invention, freewheeling would take place in one phase. Those skilled in the art will readily appreciate that a corresponding test can be applied to a controller 14 of a drive with a different number of phases. If the test shows that freewheeling is required, that phase is "primed" by the controller 14 actuating the phase switches 21 and 22 to inject current by putting the converter circuit of Figure 2 into its usual ON state. The excitation can be maintained on the phase until the usual value of regulated current is obtained, whereupon the current controller 14 is programmed to accept that operation according to the invention can then commence by freewheeling the primed phase at the same time as energising the appropriate other phase in its torque producing region. Alternatively, the excitation may be applied for a pre-determined time which will produce an acceptable value of current. As soon as a suitable current level has been reached, the phase is put into freewheel and the adjacent phase is then put in the ON state. Thereafter, the motor excitation proceeds as described above in conjunction with Figure 13.

While the above description has been in terms of rotation in one direction, those skilled in the art will realise that bi-directional operation is available by using the appropriate sequence of excitation. The invention can be applied to any polyphase system and to any switching circuit capable of freewheeling each phase. Instead of the output of the machine being torque, as in a rotating arrangement, it can be force, as in a linear reluctance motor. The skilled person will appreciate that variation of the disclosed arrangements are possible without departing from the invention. Accordingly, the above description of several embodiments is made by way of example and not for the purposes of limitation. It will be clear to the skilled person that minor modifications can be made to the arrangements without significant changes to the operation described above. The present invention is intended to be limited only by the scope of the following claims.

## Claims

1. A method of controlling a polyphase switched reluctance motor by energising phases of the motor consecutively according to a sequence, the method including the steps of:
(i) energising one phase of the motor;
(ii) subsequently energising an adjacent phase in the sequence; and
(iii) freewheeling the one phase coincidentally with at least a portion of the period of energisation of the adjacent phase in the sequence, including initiating freewheeling of the one phase and energisation of the adjacent phase simultaneously, **characterised by**:
(iv) repeating steps (ii) and (iii) for each consecutive pair of adjacent phases in the sequence.

2. A method as claimed in claim 1 in which the phase is energised according to current or flux control.

3. A method as claimed in claim 1 or 2 including starting the motor by priming the one phase by energising it when the motor is at rest in a freewheeling position of the one phase and thereafter carrying out step (iii) of claim 1.

4. A method as claimed in claim 1, 2 or 3, the motor comprising a stator on which windings for each of the phases are mounted, and a moving part which moves relative to the stator, the method further comprising determining timing of energisation of the windings according to information indicative of the position of the moving part with respect to the stator.

5. A method as claimed in claim 4 in which the information indicative of position is derived from a position transducer defining the energising period and the freewheeling period for each phase.

6. A method as claimed in any of claims 1 to 5 in which energisation of the phases is controlled by chopping.

7. A polyphase switched reluctance drive comprising a reluctance machine having a stator, phase windings, a moving part and a controller operable to control energisation of the phase windings consecutively according to a sequence to move the moving part with respect to the stator by the steps of:
(i) energising one phase;
(ii) subsequently energising an adjacent phase in the sequence; and
(iii) freewheeling the one phase coincidentally with at least a portion of the energisation of the adjacent phase in the sequence, including initiating freewheeling of the one phase and energisation of the adjacent phase simultaneously, **characterised in that** the control means are operable to repeat steps (ii) and (iii) for each consecutive pair of adjacent phases in the sequence.

8. A drive as claimed in claim 7, including feedback means for deriving a current feedback signal, the controller being arranged to receive the feedback signal as indicative of machine output to control the current.

9. A drive as claimed in claim 7, including feedback means for deriving a flux feedback signal, the controller being arranged to receive the feedback signal as indicative of machine output to control the flux.

10. A drive as claimed in claim 8 or 9, in which the feedback means also include a position transducer providing signals indicative of the position of the moving part with respect to the stator.

11. A drive as claimed in any of claims 7 to 10 in which the controller is arranged to start the machine by priming the one phase to energise it while the machine is at rest in a freewheeling position of the one phase and thereafter carrying out step (iii) of claim 7.

## Patentansprüche

1. Verfahren zum Steuern eines mehrphasengeschalteten Reluktanzmotors durch aufeinanderfolgendes Unterstromsetzen der Phasen des Motors entsprechend einer Folge, wobei das Verfahren die folgenden Schritte einschließt:
(i) Unterstromsetzen einer Phase des Motors;
(ii) anschließend Unterstromsetzen einer in der Folge benachbarten Phase; und
(iii) Freilauf der einen Phase gleichzeitig zu zumindest einem Teil der Periode des Unterstromsetzens der in der Folge benachbarten Phase, einschließlich des Einleitens des Freilaufs der einen Phase und des gleichzeitigen Unterstromsetzens der benachbarten Phase, **gekennzeichnet durch**:
(iv) Wiederholen der Schritte (ii) und (iii) für jedes aufeinander folgende Paar in der Folge benachbarter Phasen.

2. Verfahren nach Anspruch 1, wobei die Phase entsprechend einer Strom- oder Flussregelung unter Strom gesetzt wird.

3. Verfahren nach Anspruch 1 oder 2, einschließlich des Startens des Motors durch Vorbereiten der einen Phase, indem sie unter Strom gesetzt wird, wenn der Motor in Ruhe in einer Freilaufposition der einen Phase ist, und danach Ausführen des Schritts (iii) des Anspruchs 1.

4. Verfahren nach Anspruch 1, 2 oder 3, wobei der Motor einen Stator, an dem Wicklungen für jede der Phasen angebracht sind, und einen beweglichen Teil, der sich relativ zu dem Stator bewegt, aufweist, wobei das Verfahren ferner das Bestimmen des zeitlichen Ablaufs des Unterstromsetzens der Wicklungen entsprechend Informationen, die auf die Position des beweglichen Teils in Bezug auf den Stator schließen lassen, aufweist.

5. Verfahren nach Anspruch 4, wobei die Informationen, die auf die Position schließen lassen, von einem Positionsmesswertgeber abgeleitet sind und die Unterstromsetzungsperiode sowie die Freilaufperiode für jede Phase festlegen.

6. Verfahren nach einem der Ansprüche 1 bis 5, wobei das Unterstromsetzen der Phasen durch Takten gesteuert wird.

7. Mehrphasengeschalteter Reluktanzantrieb mit einer Reluktanzmaschine, die einen Stator, Phasenwicklungen, einen beweglichen Teil und eine Steuereinrichtung aufweist, die für das Steuern des aufeinanderfolgenden Unterstromsetzens der Phasenwicklungen entsprechend einer Folge betriebsfähig ist, um den beweglichen Teil in Bezug auf den Stator durch die folgenden Schritte zu bewegen:
(i) Unterstromsetzen einer Phase;
(ii) anschließend Unterstromsetzen einer in der Folge benachbarten Phase; und
(iii) Freilauf der einen Phase gleichzeitig zu zumindest einem Teil des Unterstromsetzens der in der Folge benachbarten Phase, einschließlich des Einleitens des Freilaufs der einen Phase und des gleichzeitigen Unterstromsetzens der benachbarten Phase, **dadurch gekennzeichnet, dass** die Steuerungsmittel für die Wiederholung der Schritte (ii) und (iii) für jedes aufeinander folgende Paar in der Folge benachbarter Phasen betreibbar sind.

8. Antrieb nach Anspruch 7, einschließlich Rückkopplungsmittel für ein Ableiten eines Stromrückkopplungssignals, wobei die Steuereinrichtung so ausgebildet ist, dass sie das Rückkopplungssignal, das für die Maschinenleistung indikativ ist, empfängt, um den Strom zu steuern.

9. Antrieb nach Anspruch 7, einschließlich Rückkopplungsmittel für ein Ableiten eines Flussrückkopplungssignals, wobei die Steuereinrichtung so ausgebildet ist, dass sie das Rückkopplungssignal, das für die Maschinenleistung indikativ ist, empfängt, um den Fluss zu steuern.

10. Antrieb nach Anspruch 8 oder 9, wobei die Rückkopplungsmittel außerdem einen Positionsmesswertgeber aufweisen, der Signale bereitstellt, die für die Position des beweglichen Teils in Bezug auf den Stator indikativ sind.

11. Antrieb nach einem der Ansprüche 7 bis 10, wobei die Steuereinrichtung so ausgebildet ist, dass sie die Maschine startet, indem sie die eine Phase vorbereitet, die unter Strom gesetzt wird, während die Maschine in Ruhe in einer Freilaufposition der einen Phase ist, und anschließend den Schritt (iii) des Anspruchs 7 ausführt.

## Revendications

1. Procédé pour commander un moteur à réluctance commutée polyphasé en excitant des phases du moteur d'une façon consécutive en suivant une séquence, le procédé comprenant les étapes suivantes :
(i) l'excitation d'une première phase du moteur;
(ii) l'excitation subséquente d'une phase voisine dans la séquence; et
(iii) la mise en roue libre de la première phase de façon à coïncider avec au moins une partie de la période d'excitation de la phase voisine dans la séquence, comprenant simultanément l'amorce de la mise en roue libre de la première phase et l'excitation de la phase voisine, **caractérisé par** :
(iv) la répétition des étapes (ii) et (iii) pour chaque paire consécutive de phases voisines dans la séquence.

2. Procédé selon la revendication 1, dans lequel la phase est excitée selon une régulation du courant ou du flux.

3. Procédé selon la revendication 1 ou 2, comprenant le démarrage du moteur en amorçant la première phase en excitant celle-ci lorsque le moteur est au repos dans une position de roue libre de la première phase, et en exécutant ensuite l'étape (iii) de la revendication 1.

4. Procédé selon la revendication 1, 2 ou 3, dans lequel le moteur comprend un stator sur lequel les enroulements pour chacune des phases sont montés, et une partie mobile qui se déplace par rapport au stator, le procédé comprenant en outre la détermination d'une synchronisation de l'excitation des enroulements basée sur des informations indicatives de la position de la partie mobile par rapport au stator.

5. Procédé selon la revendication 4, dans lequel les informations indicatives de la position sont dérivées d'un transducteur de position définissant la période d'excitation et la période de roue libre pour chaque phase.

6. Procédé selon l'une quelconque des revendications 1 à 5, dans lequel l'excitation des phases est commandée par hachage.

7. Dispositif d'entraînement à réluctance commutée polyphasé comprenant une machine à réluctance comprenant un stator, des enroulements de phase, une partie mobile et un dispositif de commande pouvant être actionné pour commander l'excitation des enroulements de phase d'une façon consécutive suivant une séquence pour déplacer la partie mobile par rapport au stator en exécutant les étapes suivantes :
(i) l'excitation d'une première phase;
(ii) l'excitation subséquente d'une phase voisine dans la séquence; et
(iii) la mise en roue libre de la première phase de façon à coïncider avec au moins une partie de l'excitation de la phase voisine dans la séquence, comprenant simultanément l'amorce de la mise en roue libre de la première phase et l'excitation de la phase voisine, **caractérisé en ce que** les moyens de commande peuvent être actionnés pour répéter les étapes (ii) et (iii) pour chaque paire consécutive de phases voisines.dans la séquence.

8. Dispositif d'entraînement selon la revendication 7, comprenant des moyens de réaction pour dériver un signal de réaction de courant, le dispositif de commande étant arrangé de manière à recevoir le signal de réaction comme étant indicatif de la puissance de la machine pour réguler le courant.

9. Dispositif d'entraînement selon la revendication 7, comprenant des moyens de réaction pour dériver un signal de réaction de flux, le dispositif de commande étant arrangé de manière à recevoir le signal de réaction comme étant indicatif de la puissance de la machine pour réguler le flux.

10. Dispositif d'entraînement selon la revendication 8 ou 9, dans lequel les moyens de réaction comprennent également un transducteur de position délivrant des signaux indicatifs de la position de la partie mobile par rapport au stator.

11. Dispositif d'entraînement selon l'une quelconque des revendications 7 à 10, dans lequel le dispositif de commande est arrangé de manière à faire démarrer la machine en amorçant la première phase afin d'exciter celle-ci pendant que la machine est au repos dans une position de roue libre de la première phase, et à exécuter ensuite l'étape (iii) de la revendication 7.
